# EUROPEAN PATENT APPLICATION

(11) **EP 3 916 584 A1**
(43) Date of publication of application: **01.12.2021**
(21) Application number: 21150304.0
(22) Date of filing: 05.01.2021
(51) Int. Cl.: G06F 16/95

(54) **INFORMATION PROCESSING METHOD AND APPARATUS, ELECTRONIC DEVICE AND STORAGE MEDIUM**

(30) Priority: 27.05.2020 CN 202010464303
(71) Applicant: BEIJING BAIDU NETCOM SCIENCE AND TECHNOLOGY CO. LTD., 100085 Beijing (CN)
(72) Inventor: CHEN, Lei, Haidian District, Beijing 100085 (CN); HE, Bolei, Haidian District, Beijing 100085 (CN); LIU, Kai, Haidian District, Beijing 100085 (CN); HAN, Lei, Haidian District, Beijing 100085 (CN); SUN, Ke, Haidian District, Beijing 100085 (CN)
(74) Representative: Zimmermann, Tankred Klaus

(57) **Abstract**

The present disclosure provides an information processing method, an information processing apparatus, an electronic device and a computer storage medium, relates to a field of information processing. The method includes: obtaining (202) a first content based on a first search keyword indicating a first event and a second search keyword indicating an object related to the first event; obtaining (204) information associated with an attribute of the object from the first content; obtaining (206) a second content based on the first search keyword and a third search keyword indicating a result at least caused by the first event; and generating (208) statistical data associated with the first event based on the information and the second content. Therefore, it is possible to efficiently obtain the content related to the event, and extract the information to generate the statistical data.

## Description

### TECHNICAL FIELD

The present disclosure relates to a field of information processing, and more particular to, an information processing method, an information processing apparatus, an electronic device and a computer storage medium.

### BACKGROUND

Conventionally, when performing event-related information statistics, content is generally obtained by manual retrieval and clicks of a user, and after manually extracting information from the content, statistics is performed on the information manually. This mode is often inefficient, and it is difficult to extract the information manually. In addition, it is difficult to obtain a large amount of relevant data manually.

### SUMMARY

Embodiments of the present disclosure provide an information processing method, an information processing apparatus, an electronic device and a computer storage medium.

In a first aspect, embodiments of the present disclosure provide an information processing method. The method includes: obtaining a first content based on a first search keyword indicating a first event and a second search keyword indicating an object related to the first event; obtaining information associated with an attribute of the object from the first content; obtaining a second content based on the first search keyword and a third search keyword indicating a result at least caused by the first event; and generating statistical data associated with the first event based on the information and the second content.

In a second aspect, embodiments of the present disclosure provide an information processing apparatus. The apparatus includes: a first content obtaining module, an information obtaining module, a second content obtaining module and a statistical data generating module. The first content obtaining module is configured to obtain a first content based on a first search keyword indicating a first event and a second search keyword indicating an object related to the first event. The information obtaining module is configured to obtain information associated with an attribute of the object from the first content. The second content obtaining module is configured to obtain a second content based on the first search keyword and a third search keyword indicating a result at least caused by the first event. The statistical data generating module is configured to generate statistical data associated with the first event based on the information and the second content.

In a third aspect, embodiments of the present disclosure provide an electronic device. The electronic device includes: at least one processor, and a memory communicatively connected to the at least one processor. The memory stores instructions executable by the at least one processor, and when the instructions are executed by the at least one processor, the at least one processor is caused to implement the method according to the first aspect of the present disclosure.

In a fourth aspect, embodiments of the present disclosure provide a computer-readable storage medium storing computer instructions. When the instructions are executed, the at least one processor is caused to implement the method according to the first aspect of the present disclosure.

With the technical solution of the present disclosure, it is possible to efficiently obtain the content related to the event, and extract the information to generate the statistical data, which solves a problem of inefficiency in manually obtaining the content and extracting the information.

It should be understood that the content described in this section is not intended to identify the key or important features of the embodiments of the disclosure, nor is it intended to limit the scope of the present disclosure. Additional features of the present disclosure will be easily understood by the following description.

### BRIEF DESCRIPTION OF THE DRAWINGS

The above and/or additional aspects and advantages of embodiments of the present disclosure will become apparent and more readily appreciated from the following descriptions made with reference to the drawings, and same or similar annotations indicate the same or similar elements in the drawings, in which:
FIG. 1 is a schematic diagram of an information processing environment 100 according to an embodiment of the present disclosure.
FIG. 2 is a schematic diagram of an information processing method 200 according to an embodiment of the present disclosure.
FIG. 3 is a schematic diagram of a method 300 for acquiring a first content according to an embodiment of the present disclosure.
FIG. 4 is a schematic diagram of a method 400 for acquiring a second content according to an embodiment of the present disclosure.
FIG. 5 is a block diagram of an information extraction model 500 according to an embodiment of the present disclosure.
FIG. 6 is a schematic diagram of an information processing apparatus 600 according to an embodiment of the present disclosure.
FIG. 7 is a block diagram of an electronic device used to implement the information processing method according to an embodiment of the present disclosure.

### DETAILED DESCRIPTION

The following describes the exemplary embodiments of the present disclosure with reference to the accompanying drawings, which includes various details of the embodiments of the present disclosure to facilitate understanding, which shall be considered merely exemplary. For clarity and conciseness, descriptions of well-known functions and structures are omitted in the following description.

In the description of the embodiments of the present disclosure, the term "comprising" and similar terms should be understood inclusively as "comprising but not limited to". Unless otherwise stated, the term 'or" means "and/or". The term "based on" should be understood as "based at least in part on". The term "one embodiment" or "the embodiment" should be understood as "at least one embodiment". The term "another embodiment" means "at least one additional embodiment". The terms "first", "second" and the like may refer to different or the same object. Additional explicit and implicit definitions may be described below.

As mentioned above, it is difficult to obtain a large amount of data for statistical analysis by the conventional methods of manually acquiring and extracting event-related information, and performing statistic on the information. Meanwhile, the cost of manually filtering valid or invalid content of the acquired content is very high. In addition, it is difficult and inefficient to extract and label the information in the content manually.

In order to at least partially solve one or more of the above-mentioned problems and other potential problems, exemplary embodiments of the present disclosure provide a solution for information processing. In this solution, a first content is obtained based on a first search keyword indicating a first event and a second search keyword indicating an object related to the first event. Information associated with an attribute of the object is obtained from the first content. A second content is obtained based on the first search keyword and a third search keyword indicating a result at least caused by the first event. Statistical data associated with the first event is generated based on the information and the second content.

Therefore, according to the embodiments of the present disclosure, it is possible to efficiently obtain the content related to the event, extract the information, and generate the statistical data.

Specific examples of this solution will be described in detail with reference to the accompanying drawings in the following.

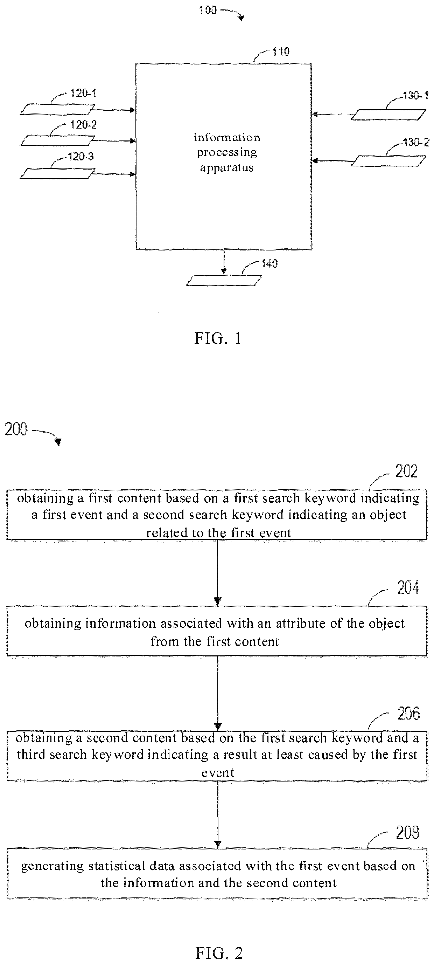

FIG. 1 is a schematic diagram of an example of an information processing environment 100 according to an embodiment of the present disclosure. The information processing environment 100 may include an information processing apparatus 110, and a first search keyword 120-1, a second search keyword 120-2, and a third search keyword 120-3, a first content 130-1 and a second content 130-2, and statistical data 140.

The information processing apparatus 110 includes, for example, but is not limited to, a personal computer, a server computer, a multi-processor system, a large-scale computer, a distributed computing environment including any of the above-mentioned systems or devices. In some embodiments, the information processing apparatus 110 may have one or more processing units, including a dedicated processing unit such as an image processing unit (GPU), a field programmable gate array (FPGA), and an application specific integrated circuit (ASIC), and a general processing unit such as a central processing unit (CPU). The information processing apparatus 110 may obtain related content through a search interface based on a search keyword. In some embodiments, the information processing apparatus 110 may access a click log of a user. The click log of the user includes historical search keywords and clicked historical webpage links corresponding to the historical search keywords.

The first search keyword 120-1 indicates a first event. The first event includes, but is not limited to, for example, a disaster event and a social event. The second search keyword 120-2 indicates an object related to the first event. The object include, but is not limited to, for example, badly-needed supplies, such as tents, clothes, food, and water. The third search keyword 120-3 indicates a result at least caused by the first event. The result may include, but is not limited to, chaotic situations such as water supply cuts, power failure, blocked roads, communication interruptions and the like.

The first content 130-1 and the second content 130-2 may include, but are not limited to, webpage content, file content, or other suitable contents.

The statistical data 140 may include, but is not limited to, statistical data about time, location, and/or events, such as various statistical charts.

The information processing apparatus 110 is configured to obtain the first content 130-1 based on the first search keyword 120-1 indicating the first event and the second search keyword 120-2 indicating the object related to the first event. Information associated with an attribute of the object is obtained from the first content 130-1. The second content 130-2 is obtained based on the first search keyword 120-1 and the third search keyword 120-3 indicating a result at least caused by the first event. The statistical data 140 associated with the first event is generated based on the information and the second content 130-2.

FIG. 2 is a flow chart of an information processing method 200 according to an embodiment of the present disclosure. For example, the method 200 may be executed by the information processing apparatus 110 as shown in FIG. 1. It should be understood that the method 200 may also include additional blocks not shown and/or that the shown blocks that may be omitted, and the scope of the present disclosure is not limited in this respect.

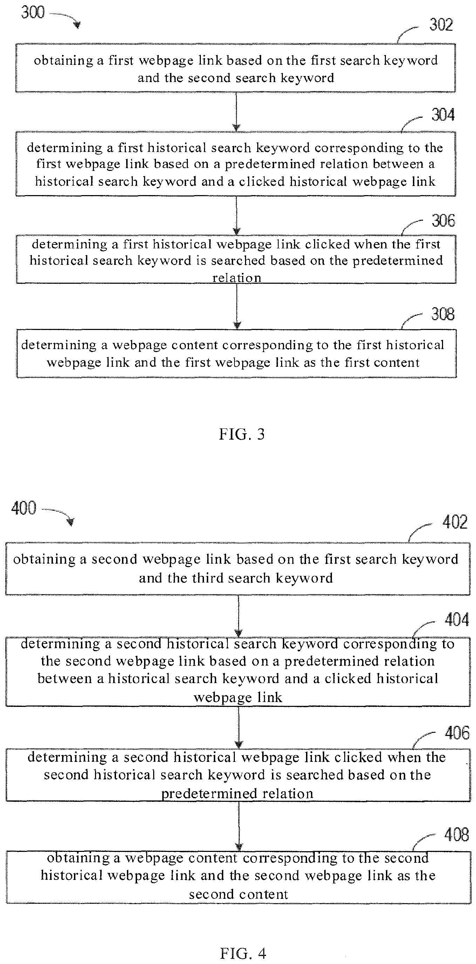

At block 202, the information processing apparatus 110 obtains a first content based on a first search keyword indicating a first event and a second search keyword indicating an object related to the first event. The first event may include, but is not limited to, disaster events and social events. The disaster events include, for example, earthquakes, floods, tsunamis and mudslides. The object related to the first event include but is not limited to supplies. Taking a disaster event as an example, objects related to the disaster event may include, for example, tents, clothes, food and water. It should be understood that the above supplies are merely examples, and the objects may include other materials or may have other meanings. The first content includes but is not limited to web content and file content. The information processing apparatus 110 may obtain the first content from the server and/or locally through a search interface. The method for obtaining the first content is described in detail below in combination with FIG. 3.

At block 204, the information processing apparatus 110 obtains information associated with an attribute of the object from the first content. The attribute may include an identifier, quantity, a geographic location and/or time of the object. The information processing apparatus 110 may obtain the above-mentioned information from the first content through, for example, an information extraction model based on a neural network. The information extraction model is trained to extract an identifier, quantity, a geographic location and time of the object from input content. The information extraction model may include, but is not limited to, for example, an information extraction model based on pre-training and self-attention mechanisms.

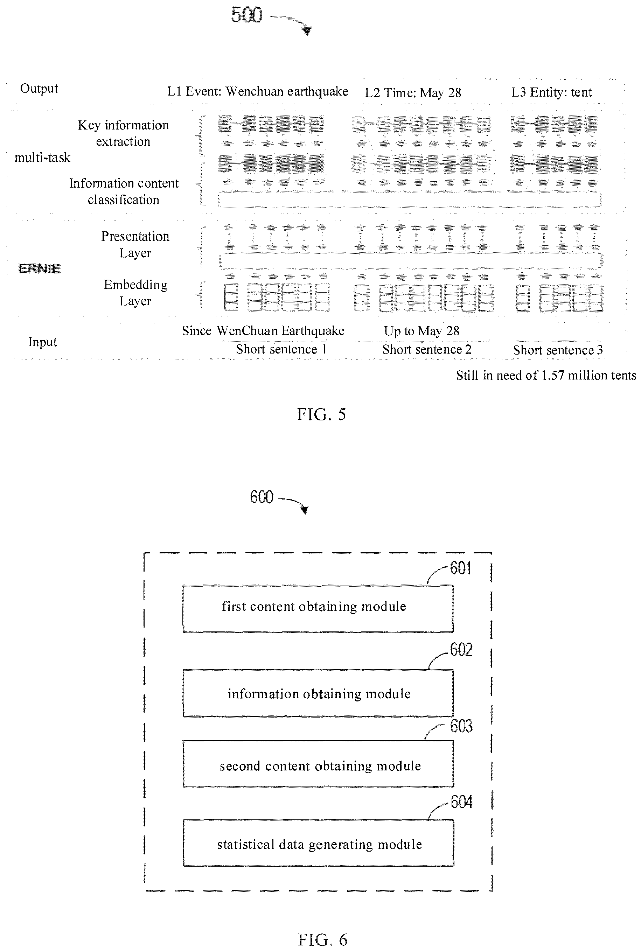

As illustrated in FIG. 5, the information extraction model 500 may include a two-layer model, the first-layer model is a pre-trained language model ERNIE, and the second-layer model is a multi-task model. The pre-trained language model ERNIE includes an embedding layer and a presentation layer. The pre-trained language model ERNIE outputs term representation based on input data. The multi-task model includes an information content classification layer and a key information extraction layer. The multi-task model is configured to perform classification and information extraction on the input term representation, and output data such as events, object identifiers, and time. It should be understood that the above model structures are only examples, and other model structures could be adopted.

In some embodiments, the information processing apparatus 110 may determine a content indicating lack of the object from the first content. For example, the information processing apparatus 110 may adopt a neural network-based classification model to determine the content indicating lack of the object from the first content. The classification model may be trained to determine whether the input content is the content indicating lack of the object or content not indicating lack of the object. Subsequently, the information processing apparatus 110 may acquire the above-mentioned information associated with an attribute of the object related to the first event from the content indicating lack of the object. In this way, the acquired first content is filtered, and only the content indicating lack of the object is acquired, which improves processing efficiency.

At block 206, the information processing apparatus 110 obtains a second content based on the first search keyword and a third search keyword indicating a result at least caused by the first event. The result at least caused by the first event may include a favorable result and an unfavorable result. Taking a disaster event as an example, a result caused by the disaster event may include unfavorable results such as water supply cuts, power failure, blocked roads, and communication interruptions.

At block 208, the information processing apparatus 110 generates statistical data associated with the first event based on the information and the second content. The statistical data may include various statistical charts, such as a broken line graph and a bar graph.

Thus, it is possible to obtain the first content including the object related to the first event and the second content including the result caused by the first event based on the keywords, and extract the object-related information therefrom for generating the statistical data, thus improving the processing efficiency.

In some embodiments, the information processing apparatus 110 may determine a tag of the second content, the tag indicates a cause of the result. The tag may include a tag indicating a category of the above-mentioned cause and a tag indicating an item associated with the above-mentioned category. For example, the tag may include a tag indicating management issues and a tag indicating issues such as poor leadership and coordination, insufficient response and misreporting. The management issues correspond to the issues such as poor leadership and coordination, insufficient response, and misreporting. It should be understood that the above tags are only examples, and the tags may indicate other contents, which makes the tag more hierarchical and copiously to reflect the content.

Subsequently, the information processing apparatus 110 may generate the statistical data about the attribute of the object and associated with the first event based on the information and the tag. The attribute may include an identifier, quantity, a geographic location and/or time associated with the object. For example, a result of changes in the above information and/or the tag over time may be generated. For example, a curve of each supply item of supplies data and chaotic tags over time may be obtained by dividing the supplies data and chaotic data of several major earthquakes according to the post-earthquake time from the first day to the 180th day. For example, comparison data of the above-mentioned information and/or the tag may be generated for at least two events. For example, by comparing conditions of supplies shortage between two earthquakes in combination with the intensities of the two earthquakes, progress and deficiencies of material allocation between the two earthquakes are obtained. Speed of responding to unfavorable results may be obtained from unfavorable results such as chaos. For example, a result of changes of the above information and/or tags over geographical locations and/or seasons are generated. For example, according to seasons, or according to geographical locations such as plains and hills, changes in supplies needed and changes in chaotic unfavorable results at different seasons and/or different geographical locations are determined.

Therefore, the second content may be labeled without manual labeling, which improves the processing efficiency, and the statistical data is generated in at least one dimension, thus the statistical results are more comprehensive.

In some embodiments, the information processing apparatus 110 may determine a content indicating the result from the second content. For example, the information processing apparatus 110 may use a neural network-based classification model to determine the content indicating the result from the second content. The classification model is trained to determine whether an input content indicates the result or not. Subsequently, the information processing apparatus 110 may determine a tag of the content indicating the result. In this way, the acquired second content is filtered, and only the content indicating the result is labeled, which improves the processing efficiency.

FIG. 3 is a schematic diagram of a method 300 for acquiring the first content according to an embodiment of the present disclosure. For example, the method 300 may be executed by the information processing apparatus 110 as shown in FIG. 1. It should be understood that the method 300 may also include additional blocks not shown and/or the shown blocks that could be omitted, and the scope of the present disclosure is not limited in this respect.

At block 302, the information processing apparatus 110 obtains a first webpage link based on the first search keyword and the second search keyword. The information processing apparatus 110 may obtain the first webpage link through a search interface. For example, a search may be performed based on a combination of the first search keyword and the second search keyword through the search interface to obtain a search result. In some embodiments, a portion of the search result may be obtained as the first webpage link, for example, the first 200 webpage links in the search result.

At block 304, the information processing apparatus 110 determines a first historical search keyword corresponding to the first webpage link based on a predetermined relation between a historical search keyword and a clicked historical webpage link. For example, the information processing apparatus 110 may access a user click log that includes historical search keywords and clicked historical webpage links corresponding to the historical search keywords. In an embodiment of the present disclosure, a relation between a historical search keyword K-WORD and a clicked historical webpage link WEB means that the webpage link WEB is clicked by a user when the search keyword K-WORD is used to perform a search during a historical search. This relation may be obtained from the user click log. In the user click log, one historical search keyword may correspond to one or more clicked historical webpage links, and one clicked historical webpage link may correspond to one or more historical search keyword. By searching for the first webpage link in the user click log, a historical search keyword corresponding to the found first webpage link is obtained and determined as the first historical search keyword corresponding to the first webpage link.

At block 306, the information processing apparatus 110 determines a first historical webpage link clicked when the first historical search keyword is searched based on the predetermined relation. For example, the information processing apparatus 110 may search for the first historical search keyword in the user click log, and obtain a historical webpage link corresponding to the found first historical search keyword as the first historical webpage link clicked when the first historical search keyword is used to perform a search.

At block 308, the information processing apparatus 110 determines a webpage content corresponding to the first historical webpage link and the first webpage link as the first content. For example, the information processing apparatus 110 may obtain the webpage content corresponding to the first historical webpage link and the first webpage link from a database storing content corresponding to respective webpage links as the first content.

In this way, the first webpage link is expanded based on the predetermined relation between the historical search keywords and the clicked historical webpage links, so that a large amount of content may be obtained for subsequent analysis.

FIG. 4 is a schematic diagram of a method 400 for acquiring the second content according to an embodiment of the present disclosure. For example, the method 400 may be executed by the information processing apparatus 110 as shown in FIG. 1. It should be understood that the method 400 may also include additional blocks not shown and/or shown blocks that could be omitted, and the scope of the present disclosure is not limited in this respect.

At block 402, the information processing apparatus 110 obtains a second webpage link based on the first search keyword and the third search keyword. For example, the information processing apparatus 110 may obtain the second webpage link through a search interface. For example, a search may be performed based on a combination of the first search keyword and the third search keyword through the search interface to obtain a search result. In some embodiments, a portion of the search result may be obtained as the second webpage link, for example, the first 200 webpage links in the search result.

At block 404, the information processing apparatus 110 determines a second historical search keyword corresponding to the second webpage link based on a predetermined relation between a historical search keyword and a clicked historical webpage link. The information processing apparatus 110 may, for example, access a user click log that includes the historical search keywords and clicked historical webpage links corresponding to the historical search keywords. By searching for the second webpage link in the user click log, a historical search keyword corresponding to the found second webpage link is obtained and determined as the second historical search keyword corresponding to the second webpage link.

At block 406, the information processing apparatus 110 determines a second historical webpage link clicked when the second historical search keyword is searched based on the predetermined relation. For example, the information processing apparatus 110 may search for the second historical search keyword in the user click log, and obtain a historical webpage link corresponding to the found second historical search keyword as the second historical webpage link clicked when the second historical search keyword is used to perform a search.

At block 408, the information processing apparatus 110 obtains a webpage content corresponding to the second historical webpage link and the second webpage link as the second content. The information processing apparatus 110 may obtain the webpage content corresponding to the second historical webpage link and the second webpage link from a database storing content corresponding to respective webpage links as the second content.

Therefore, the second webpage link is expanded according to the predetermined relation between the historical search keywords and the clicked historical webpage links, so that a large amount of content may be obtained for subsequent analysis.

FIG. 6 is a schematic diagram of an information processing apparatus 600 according to an embodiment of the present disclosure. As illustrated in FIG. 6, the information processing apparatus 600 includes: a first content obtaining module 601, an information obtaining module 602, a second content obtaining module 603 and a statistical data generating module 604. The first content obtaining module 601 is configured to obtain a first content based on a first search keyword indicating a first event and a second search keyword indicating an object related to the first event. The information obtaining module 602 is configured to obtain information associated with an attribute of the object from the first content. The second content obtaining module 603 is configured to obtain a second content based on the first search keyword and a third search keyword indicating a result at least caused by the first event. The statistical data generating module 604 is configured to generate statistical data associated with the first event based on the information and the second content.

In some embodiments, the first content obtaining module 601 includes a first webpage link obtaining sub-module, a first historical search keyword obtaining sub-module, a first historical webpage link obtaining sub-module and a webpage content obtaining sub-module. The first webpage link obtaining sub-module is configured to obtain a first webpage link based on the first search keyword and the second search keyword. The first historical search keyword obtaining sub-module is configured to determine a first historical search keyword corresponding to the first webpage link based on a predetermined relation between a historical search keyword and a clicked historical webpage link. The first historical webpage link obtaining sub-module is configured to determine a first historical webpage link clicked when the first historical search keyword is searched based on the predetermined relation. The webpage content obtaining sub-module is configured to determine a webpage content corresponding to the first historical webpage link and the first webpage link as the first content.

In some embodiments, the second content obtaining module 603 includes a second webpage link obtaining sub-module, a second historical search keyword obtaining sub-module, a second historical webpage link obtaining sub-module and a webpage content obtaining sub-module. The second webpage link obtaining sub-module is configured to obtain a second webpage link based on the first search keyword and the third search keyword. The second historical search keyword obtaining sub-module is configured to determine a second historical search keyword corresponding to the second webpage link based on a predetermined relation between a historical search keyword and a clicked historical webpage link. The second historical webpage link obtaining sub-module is configured to determine a second historical webpage link clicked when the second historical search keyword is searched based on the predetermined relation. The webpage content obtaining sub-module is configured to obtain a webpage content corresponding to the second historical webpage link and the second webpage link as the second content.

In some embodiments, the information obtaining module 602 includes a content determining sub-module and an obtaining sub-module. The content determining sub-module is configured to determine a content indicating lack of the object from the first content. The obtaining sub-module is configured to obtain the information from the content indicating lack of the object.

In some embodiments, statistical data generating module 604 includes a tag determining sub-module and a data generating sub-module. The tag determining sub-module is configured to determine a tag of the second content, in which the tag indicates a cause of the result. The data generating sub-module is configured to generate the statistical data about the attribute of the object and associated with the first event based on the information and the tag, in which the attribute includes at least one of identifier, quantity, a geographic location, and time of the object.

In some embodiments, the tag includes a tag indicating a category of the cause and a tag indicating an item associated with the category.

In some embodiments, the tag determining sub-module includes: a content determining unit and a determining unit. The content determining unit is configured to determine a content indicating the result from the second content. The determining unit is configured to determine a tag of the content indicating the result.

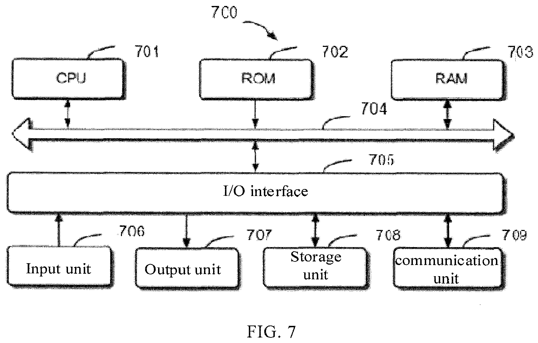

FIG. 7 is a block diagram of an example device 700 capable of implementing some embodiments of the present disclosure. For example, the information processing apparatus 110 shown in FIG. 1 may be implemented by the device 700. As shown, the device 700 includes a central processing unit (CPU) 701 that performs various appropriate actions and processes according to computer program instructions stored in a read-only memory (ROM) 702 or computer program instructions loaded into a random access memory (RAM) 703 from a storage unit 708. In the RAM 703, various programs and data required for the operation of the device 700 can also be stored. The CPU 701, the ROM 702, and the RAM 703 are connected to each other through a bus 704. An input/output (I/O) interface 705 is also connected to a bus 704.

Components in the device 700 are connected to the I/O interface 705, including: an input unit 706, such as a keyboard, a mouse; an output unit 707, such as various types of displays, speakers; a storage unit 708, such as a disk, an optical disk; and a communication unit 709, such as network cards, modems, wireless communication transceivers, and the like. The communication unit 709 allows the device 700 to exchange information/data with other devices through a computer network such as the Internet and/or various telecommunication networks.

The various processes described above, such as the methods 200-400, may be performed by the processing unit 701. For example, in some embodiments, the methods 200-400 may be implemented as a computer software program that is tangibly embodied on a machine-readable medium, such as the storage unit 708. In some embodiments, part or all of the computer program may be loaded and/or installed on the device 700 via the ROM 702 and/or the communication unit 709. When a computer program is loaded into the RAM 703 and executed by the CPU 701, one or more steps of the methods 200-400 described above may be performed.

The present disclosure may be a method, device, system, and/or computer program product. The computer program product may include a computer-readable storage medium on which computer-readable program instructions for performing various aspects of the present disclosure are loaded.

A computer-readable storage medium may be a tangible device that can hold and store instructions used by the instruction execution device. The computer-readable storage medium may be, for example, but not limited to, an electric storage device, a magnetic storage device, an optical storage device, an electromagnetic storage device, a semiconductor storage device, or any suitable combination of the foregoing. More specific examples (non-exhaustive list) of computer-readable storage media include: portable computer disks, hard disks, random access memory (RAM), read-only memory (ROM), erasable programmable read-only memory (EPROM or flash memory), static random access memory (SRAM), portable compact disc read-only memory (CD-ROM), digital versatile disc (DVD), memory stick, floppy disk, mechanical encoding device, a protruding structure in the hole card or groove with instructions stored thereon, and any suitable combination of the above. Computer-readable storage media used herein are not to be interpreted as transient signals per se, such as radio waves or other freely propagating electromagnetic waves, electromagnetic waves propagating through waveguides or other transmission media (for example, light pulses through fiber optic cables), or electrical signal transmitted via electrical wires.

The computer-readable program instructions described herein can be downloaded from a computer-readable storage medium to various computing/processing devices or downloaded to an external computer or external storage device via a network, such as the Internet, a local area network, a wide area network, and/or a wireless network. The network may include copper transmission cables, fiber optic transmission, wireless transmission, routers, firewalls, switches, gateway computers, and/or edge servers. The network adapter card or network interface in each computing/processing device receives computer-readable program instructions from the network and forwards the computer-readable program instructions for storage in a computer-readable storage medium in each computing/processing device.

The computer program instructions for performing the operations of the present disclosure may be assembly instructions, instruction set architecture (ISA) instructions, machine instructions, machine-related instructions, microcode, firmware instructions, state setting data, or one or more source code or object code written in any combination of programming languages, including object-oriented programming languages-such as Smalltalk, C++, and conventional procedural programming languages-such as "C" or similar programming languages. Computer-readable program instructions may be executed entirely on the user's computer, partly on the user's computer, as a stand-alone software package, partly on the user's computer and partly on a remote computer, or entirely on a remote computer or server. In the case of a remote computer, the remote computer can be connected to the user's computer through any kind of networks, including local area networks (LAN) or wide area networks (WAN), or it can be connected to an external computer (such as through the Internet by an internet service provider). In some embodiments, the electronic circuit is personalized by using the state information of the computer-readable program instructions, such as a programmable logic circuit, a field programmable gate array (FPGA), or a programmable logic array (PLA). The electronic circuit may execute computer-readable program instructions to implement various aspects of the present disclosure.

Various aspects of the present disclosure are described herein with reference to flowcharts and/or block diagrams of methods, devices (systems) and computer program products according to embodiments of the present disclosure. It should be understood that each block of the flowcharts and/or block diagrams, and combinations of blocks in the flowcharts and/or block diagrams, can be implemented by computer-readable program instructions.

These computer-readable program instructions can be provided to a processing unit of a general-purpose computer, special-purpose computer, or other programmable data processing device, thereby producing a machine such that when these instructions are processed by the processing units of a computer or other programmable data processing device, a device for implementing the functions/actions specified in one or more blocks in the flowcharts and/or block diagrams is generated. These computer-readable program instructions may also be stored in a computer-readable storage medium, and these instructions cause a computer, a programmable data processing apparatus, and/or other devices to work in a specific manner. Thus, a computer-readable medium storing instructions includes: an article of manufacture that includes instructions to implement various aspects of the functions/acts specified in one or more blocks in the flowchart and/or block diagram.

The computer-readable program instructions may also be loaded on a computer, other programmable data processing device, or other device, so that a series of operation steps are performed on the computer, other programmable data processing device, or other device to generate a computer implementation process, so that instructions executed on a computer, other programmable data processing device, or other device implement the functions/actions specified in one or more blocks in the flowchart and/or block diagram.

The flowchart and block diagrams in the figures show the architecture, functionality, and operation of possible implementations of systems, methods and computer program products according to various embodiments of the present disclosure. In this regard, each block in the flowchart or block diagram may represent a module, a program segment, or a part of an instruction that contains one or more executable instructions for implementing a specified logical function. In some alternative implementations, the functions marked in the blocks may also occur in a different order than those marked in the drawings. For example, two consecutive blocks may actually be executed substantially in parallel, and they may sometimes be executed in the reverse order, depending on the functions involved. It should also be noted that each block in the block diagrams and/or flowcharts, and combinations of blocks in the block diagrams and/or flowcharts, can be implemented in a dedicated hardware-based system that performs the specified function or action, or it can be implemented with a combination of dedicated hardware and computer instructions.

The embodiments of the present disclosure have been described above, the above description is exemplary, not exhaustive, and is not limited to the disclosed embodiments. The terminology used herein is chosen to best explain the principles of the embodiments, practical applications or improvements to the technology in the market, or to enable others to understand the embodiments disclosed herein.

## Claims

1. An information processing method (200), comprising:
obtaining (202) a first content based on a first search keyword indicating a first event and a second search keyword indicating an object related to the first event;
obtaining (204) information associated with an attribute of the object from the first content;
obtaining (206) a second content based on the first search keyword and a third search keyword indicating a result at least caused by the first event; and
generating (208) statistical data associated with the first event based on the information and the second content.

2. The method (300) according to claim 1, wherein obtaining the first content (202) comprises:
obtaining (302) a first webpage link based on the first search keyword and the second search keyword;
determining (304) a first historical search keyword corresponding to the first webpage link based on a predetermined relation between a historical search keyword and a clicked historical webpage link;
determining (306) a first historical webpage link clicked when the first historical search keyword is searched based on the predetermined relation; and
determining (308) a webpage content corresponding to the first historical webpage link and the first webpage link as the first content.

3. The method (400) according to claim 1 or 2, wherein obtaining the second content comprises:
obtaining (402) a second webpage link based on the first search keyword and the third search keyword;
determining (404) a second historical search keyword corresponding to the second webpage link based on a predetermined relation between a historical search keyword and a clicked historical webpage link;
determining (406) a second historical webpage link clicked when the second historical search keyword is searched based on the predetermined relation; and
obtaining (408) a webpage content corresponding to the second historical webpage link and the second webpage link as the second content.

4. The method according to any one of claims 1 to 3, wherein obtaining (204) the information associated with the attribute of the object from the first content comprises:
determining a content indicating lack of the object from the first content; and
obtaining the information from the content indicating lack of the object.

5. The method according to any one of claims 1 to 4, wherein generating (208) the statistical data comprises:
determining a tag of the second content, wherein the tag indicates a cause of the result; and
generating the statistical data about the attribute of the object and associated with the first event based on the information and the tag, wherein the attribute comprises at least one of an identifier, quantity, a geographic location, and time of the object.

6. The method according to claim 5, wherein the tag comprises a tag indicating a category of the cause and a tag indicating an item associated with the category.

7. The method according to claim 5 or 6, wherein determining the tag of the second content comprises:
determining a content indicating the result from the second content; and
determining a tag of the content indicating the result.

8. An information processing apparatus (600), comprising:
a first content obtaining module (601), configured to obtain a first content based on a first search keyword indicating a first event and a second search keyword indicating an object related to the first event;
an information obtaining module (602), configured to obtain information associated with an attribute of the object from the first content;
a second content obtaining module (603), configured to obtain a second content based on the first search keyword and a third search keyword indicating a result at least caused by the first event; and
a statistical data generating module (604), configured to generate statistical data associated with the first event based on the information and the second content.

9. The apparatus (600) according to claim 8, wherein the first content obtaining module (601) comprises:
a first webpage link obtaining sub-module, configured to obtain a first webpage link based on the first search keyword and the second search keyword;
a first historical search keyword obtaining sub-module, configured to determine a first historical search keyword corresponding to the first webpage link based on a predetermined relation between a historical search keyword and a clicked historical webpage link;
a first historical webpage link obtaining sub-module, configured to determine a first historical webpage link clicked when the first historical search keyword is searched based on the predetermined relation; and
a webpage content obtaining sub-module, configured to determine a webpage content corresponding to the first historical webpage link and the first webpage link as the first content.

10. The apparatus (600) according to claim 8 or 9, wherein the second content obtaining module (603) comprises:
a second webpage link obtaining sub-module, configured to obtain a second webpage link based on the first search keyword and the third search keyword;
a second historical search keyword obtaining sub-module, configured to determine a second historical search keyword corresponding to the second webpage link based on a predetermined relation between a historical search keyword and a clicked historical webpage link;
a second historical webpage link obtaining sub-module, configured to determine a second historical webpage link clicked when the second historical search keyword is searched based on the predetermined relation; and
a webpage content obtaining sub-module, configured to obtain a webpage content corresponding to the second historical webpage link and the second webpage link as the second content.

11. The apparatus (600) according to any one of claims 8 to 10, wherein the information obtaining module (602) comprises:
a content determining sub-module, configured to determine a content indicating lack of the object from the first content; and
an obtaining sub-module, configured to obtain the information from the content indicating lack of the object.

12. The apparatus (600) according to any one of claims 8 to 11, wherein the statistical data generating module (604) comprises:
a tag determining sub-module, configured to determine a tag of the second content, wherein the tag indicates a cause of the result; and
a data generating sub-module, configured to generate the statistical data about the attribute of the object and associated with the first event based on the information and the tag, wherein the attribute comprises at least one of an identifier, quantity, a geographic location, and time of the object.

13. An electronic device, comprising:
at least one processor; and
a memory connected in communication with the at least one processor; wherein,
the memory stores instructions executable by the at least one processor, when the instructions are executed by the at least one processor, the at least one processor are caused to implement the method according to any one of claims 1-7.

14. A non-transitory computer-readable storage medium storing computer instructions, wherein the computer instructions are configured to cause the computer to implement the method according to any one of claims 1-7.

15. A computer program storing computer instructions, wherein the computer instructions are configured to cause the computer to implement the method according to any one of claims 1-7.
